# EUROPEAN PATENT SPECIFICATION

(11) **EP 4 345 320 B1**
(45) Date of publication and mention of the grant of the patent: **25.11.2026**
(21) Application number: 24158642.9
(22) Date of filing: 05.10.2022
(51) Int. Cl.: E04F 11/025, E04F 11/035, E04F 15/024, F16B 7/04, F16B 2/10, F16B 7/18, E04F 11/02, F24F 13/32

(54) **SUPPORT ASSEMBLY AND KIT OF PARTS THEREOF**
STÜTZANORDNUNG SOWIE TEILESATZ DAFÜR
ENSEMBLE DE SUPPORT ET KIT DE PIÈCES ASSOCIÉ

(30) Priority: 08.10.2021 GB 202114427
(43) Date of publication of application: 03.04.2024
(62) Document number(s) of the earlier application(s) in accordance with Art. 76 EPC: 22199742.2 / 4 215 689
(73) Proprietor: Big Foot Systems Limited, Hailsham East Sussex BN27 3WA (GB)
(72) Inventor: OLUWAROUNKE, Emmanuel, East Sussex, BN27 3WA (GB); BIRCH, Sam, BN27 3WA East Sussex (AE)
(74) Representative: HGF

(56) References cited:
- KR-B1- 102 112 964
- US-A- 4 527 366
- EMMANUEL OLUWAROUNKE: "PRODUCT SPECIFICATION: Big Foot Systems Multi Frame", 3 April 2019 (2019-04-03), XP093155355, Retrieved from the Internet <URL:https://www.aspenpumps.com/sites/default/files/en-int/big-foot/tech-sheets/Multi-Frame-Spec.pdf> [retrieved on 20240424]

## Description

This invention relates to a support assembly. More specifically, although not exclusively, this invention relates to a support assembly for providing safe access at height in a non-penetrative support assembly.

### BACKGROUND

When plant, for example air conditioning units, air handlers, chillers and plant rooms, is supported, or access is provided at substantial height from the roof, instability and rocking movement of a support frame supporting the plant and/or person can be observed. This rocking movement may be caused by a user accessing the plant, or by high winds that impact the plant at height.

Current bracing systems for support frames are only effective between very limited frame heights and require considerable time to install. Furthermore, prior art designs need to be mounted in a specific order when assembling the support frame, which makes it highly inconvenient to retrofit a bracing system after a support frame has been installed, as this may require removing the plant, typically requiring a crane, and potentially disassembling the entire support frame in order to slide on the components of the bracing system as the support frame is built.

In the applicant's own prior disclosure: "Product Specification: Big Foot Systems Multi Frame", 3 April 2019 [https://www.aspenpumps.com/sites/default/files/en-int/big-foot/tech-sheets/Multi-Frame-Spec.pdf] [XP093155355], there is disclosed a support assembly as set forth in the preamble of the accompanying claim 1.

US4527366 discloses a curvilinear stairway construction which includes steps extending between stringer elements that each include multiple sets of holes which allow for adjacent stringer elements to be adjusted relative to one another to accommodate different curvatures and for mounting posts of a handrail assembly.

KR102112964 discloses a "header" which can be mounted onto posts which support a raised floor for equipment. The header is connected to bracing or a horizontal frame section around the periphery of the equipment to reinforce the raised floor to provide improved resistance to earthquakes. The bracing can be hooked onto bolts which secure flanged sections of the header together.

Safe access is required to service plant and or to avoid obstacles on roofs such as ducts & pipe work. To safely access or service plant when height of fall could exceed 500mm, British standard states, guardrail must be installed. Industry standard steps & handrail are only able to support a very limited roof height, typically up to 800mm as standard. Prior art solutions to this problem require steps & handrails to be fabricated to fit each roof requirement over 800mm height. This results in long lead-time and higher design costs. As height requirement increases, design size becomes very substantial, and the constituent components become increasingly difficult to transport and to stock.

The present invention seeks to address at least some of these issues.

### BRIEF SUMMARY OF THE DISCLOSURE

In order to achieve the above-mentioned objectives, the invention provides a support assembly as defined in claim 1, a kit of parts for a support assembly as defined in claim 11 and a method of assembling a support assembly as defined in claim 12. Further aspects and preferred embodiments are defined in the dependent claims. Any aspects, embodiments and examples of the present disclosure which do not fall under the scope of the appended claims do not form part of the invention and are merely provided for illustrative purposes.

There is disclosed herein a bracing system for bracing a frame formed of a plurality of frame elements. The bracing system comprises: a bracket having a first part releasably interlocked with a second part, wherein, when the first part is interlocked with the second part, the bracket is arranged to clamp a first of the plurality of frame elements; a first bar having a first end connected to the first part and a second end connected to a second of the plurality of frame elements, and a second bar having a first end connected to the second part and a second end connected to a third of the plurality of frame elements. The first part is arranged to transfer a load from the second frame element to a first side of the first frame element when the first and second parts are interlocked. The second part is arranged to transfer a load from the third frame element to a second side of the first frame element when the first and second parts are interlocked.

Thus, the present bracing system substantially reduces instability and rocking, for example under heavy wind loading, in support assemblies. The present bracing system is also compatible with various orientations of support assembly frame elements, and allows a user to add bracing systems to be retrofit to existing support assemblies.

The first part may be secured to the second part via a single fixing point. This provides a quick and convenient way of clamping and releasing the bracket from the frame element.

The first side may be adjacent to the second side. The first side may be substantially perpendicular to the second side. This advantageously allows for compatibility with profiles having a substantially square or rectangular cross-section.

When the first and second parts are disengaged, the bracket may be slidable along the first frame element. This advantageously provides increased user adjustability.

The first frame element may have a longitudinal axis. The first bar and the second bar may be mountable at a plurality of discrete angles relative to the longitudinal axis. The first bar may be mountable at a first angle and the second bar be mountable at a second angle different to the first angle.

One of the first part or the second part may comprise a tongue portion arranged to extend through a corresponding slot formed in the other of the first part or the second part to interlock with the other of the first part or the second part. This advantageously allows the two parts to be separated while the frame is under load.

Upon releasing the second part from the first part, the second part may be arranged to rotate relative to the first part, such that the first part is separable from the second part.

The first part may comprise a first flange portion for securing the first end of the first bar thereto. The first part and the second part may be arranged to form a second flange portion for securing the second end of the second bar thereto.

The first bar may comprise a first flange portion at the first end. The first bar may comprise a second flange portion at the second end. The first bar may comprise an interconnection portion between the first flange portion and the second flange portion.

When clamped, the first part may abut two sides of the frame element. When clamped, the second part may abut three sides of the frame element.

The interconnecting portion may comprise a longitudinal axis. Any of the first flange portion or the second flange portion extend at an acute angle relative to the longitudinal axis of the interconnecting portion.

The interconnecting portion may have a planar surface defining a plane. The first flange portion and the second flange portion may be disposed on opposed sides of the plane. This advantageously provides a bracing system which can accommodate the thickness of other brackets which may be present on the frame elements.

The first bar may have substantially the same profile as the second bar. By using similar bars, this reduces the need to stock different bars for the first and second bars, which reduces waste as the same bar can be used interchangeably.

The bracing system may comprise a C-shaped bracket for connecting the second end of the second bar to the third frame element. The bracing system may comprise a C-shaped bracket for connecting the second end of the first bar to the second frame element.

The bracing system may comprise a second bracket having a first part arranged to releasably interlock with a second part. When the first part of the second bracket is interlocked with the second part of the second bracket, the second bracket may be arranged to clamp the second frame element. The second end of the first bar may be connectable to the second bracket via the first part of the second bracket.

The bracing system may comprise a third bracket having a first part arranged to releasably interlock with a second part. When the first part of the third bracket is interlocked with the second part of the third bracket, the third bracket may be arranged to clamp the third frame element. The second end of the second bar may be connectable to the third bracket via the first part of the third bracket.

Any of the first frame element, the second frame element and the third frame element may have the same cross-sectional profile. Any of the first frame element, the second frame element and the third frame element may have a box section profile.

There is also disclosed a bracket for use in the above-described bracing system.

There is further disclosed a bracket comprising: a first part releasably interlockable with a second part. When the first part is interlocked with the second part, the bracket is arranged to clamp a first frame element. The first part is arranged to transfer a load from a first bar connected thereto to a first side of the first frame element when the first and second parts are interlocked. The second part is arranged to transfer a load from a second bar connected thereto to a second side of the first frame element when the first and second parts are interlocked. The first side is adjacent to the second side. In some cases, the first side is substantially perpendicular to the second side.

Relatedly, there is disclosed a bracing kit for bracing a frame formed of a plurality of frame elements. The bracing kit comprises a bracket as described above, and a plurality of bars for use as the first bar and the second bar in a bracing system as also described above. A kit of parts can be more easily brought to site which provides a more straightforward retrofit compared to having to transport a fully assembled bracing system.

There is yet further disclosed a support assembly comprising: a pair of support legs arranged to secure a platform above a surface in a first direction, wherein each of the pair of support legs has a bracket as described above secured thereto, and a bar connecting the pair of support legs via their respective bracket. The support assembly is preferably suitable for supporting a load above a surface. The load may be a person. The load may be plant, for example an air conditioning unit, air handlers, chillers, a plant room or similar HVAC-R equipment.

Viewed from a first aspect, there is provided a support assembly, as set forth in the accompanying claim 1, comprising: a platform and one or more supports configured to secure the platform above a surface in a first direction. The platform is formed of a plurality of frame elements and has an upper area accessible from a first side of the platform and a second side of the platform adjacent the first side. The first side is at a first height relative to the surface and the second side is at a second height relative to the surface. The first height is different to the second height. The support assembly also comprises a step element comprising a pair of opposed side plates and at least one step secured between the opposed side plates. Each side plate has a first set of holes comprising a first pair of holes and a second pair of holes. The first pair of holes are spaced below the second pair of holes in the first direction. The step element is mounted to: the first side of the platform via the first pair of holes formed in the opposed side plates, or the second side of the platform via the second pair of holes formed in the opposed side plates. This advantageously utilises the same step elements to form step assemblies which can be fixed at different heights from the surface. The interchangeable step elements provides improved usability.

Further optional aspects are set out in the accompanying dependent claims. For example, the support assembly is preferably suitable for supporting a load above a surface. The load may be a person. The load may be plant, for example an air conditioning unit, air handlers, chillers, a plant room or similar HVAC-R equipment.

The first pair of holes may be arranged as slots. The slots may extend in the first direction. This advantageously allows the same step element to be used with different sizes of profile with the same brackets.

The slots may extend by 10mm. This advantageously provides variable spacing between the holes, which allows the step element to be connected to both light duty frame and heavy duty frame.

The first set of holes may be arranged at an upper end of the opposed side plates. Each of the opposed side plates may comprise a second set of holes at a lower end of each side plate for securing a second step element thereto. The second set of holes may be in substantially the same arrangement as the first set of holes. This advantageously allows the same step element which is connectable to the platform to be connectable to a second step element to form a step assembly. Thus, a chain of step elements can be formed to provide access at any height from the surface.

The platform may comprise a first plurality of frame elements and a second plurality of frame elements mounted on top of the first plurality of frame elements. A first of the first plurality of frame elements may provide the first side of the platform. A first of the second plurality of frame elements may provide the second side of the platform.

The first of the second plurality of frame elements may have a height in the first direction. The first pair of holes may be spaced from the second set of holes by at least the height of the first of the second plurality of frame elements. This advantageously allows the same steps to be used with when there are different connection heights using the same brackets.

The first plurality of frame elements and the second plurality of frame elements may be formed as box section elements. Each box section element may have a longitudinal axis. The longitudinal axes of the first plurality of box section elements extend in a first direction and the longitudinal axes of the second plurality of box section elements extend in a second direction different to the first direction.

The support assembly may comprise one or more non-penetrative ground supports. This is advantageous as the support assembly can be free-standing on the surface and does not cause any damage to the surface on which the platform is mounted. The surface may be a rooftop.

The support assembly may comprise a handrail securable to one of the side plates of the step element.

Viewed from a further independent aspect, there is also provided a kit of parts for a support assembly, as set forth in the accompanying claim 11, the kit of parts comprising: a platform and one or more supports configured to secure a platform above a surface in a first direction, a plurality of frame elements for providing the platform, the platform having an upper area accessible from a first side of the platform and a second side of the platform adjacent the first side. The first side is at a first height relative to a surface and the second side is at a second height relative to the surface. The first height is different to the second height. The kit of parts further comprises a step element comprising a pair of side plates. Each of the side plates has a first set of holes comprising a first pair of holes and a second pair of holes. The first pair of holes are spaced below the second pair of holes in the first direction. The kit of parts further comprises a step mountable between the side plates. The first pair of holes are configured to mount the step element to the first side of the platform. The second pair of holes are configured to mount the step element to the second side of the platform. A kit of parts can be more easily brought to site which provides a more straightforward installation procedure compared to having to transport a fully assembled support assembly.

The kit of parts may further comprise a bracing system as described above, or a bracing kit as described above. This advantageously provides a support assembly which has reduced instability and rocking, particularly under wind loading.

Viewed from a further independent aspect, there is provided a method of assembling a support assembly, as set forth in the accompanying claim 12, comprising the steps of: securing a platform above a surface in a first direction using one or more supports, wherein the platform is formed of a plurality of frame elements and has an upper area accessible from a first side of the platform and a second side of the platform adjacent the first side, wherein the first side is at a first height relative to the surface and the second side is at a second height relative to the surface, and wherein the first height is different to the second height, and securing a step element as defined in the support assembly of the first aspect to the first side or the second side of the platform.

Where the first set of holes of the first step element are arranged at an upper end of the opposed side plates and each of the opposed side plates comprises a second set of holes at a lower end of each side plate for securing a second step element thereto and where the second set of holes are in substantially the same arrangement as the first set of holes, the method comprises securing a second step element to the first step element via the second set of holes of the first step element.

### BRIEF DESCRIPTION OF THE DRAWINGS

Aspects of the disclosure are further described hereinafter with reference to the accompanying drawings, in which:
Figure 1 illustrates an exemplary bracing system;
Figure 2 is a magnified view of a portion of the bracing system of Figure 1;
Figures 3A & 3B illustrate perspective views of an exemplary bracket;
Figures 4A & 4B illustrate perspective and 3/4 side views of an exemplary support assembly;
Figures 5A to 5C illustrate perspective and side views of an alternative exemplary support assembly;
Figures 6A and 6B illustrate an exemplary bar;
Figure 7 illustrates a further exemplary support assembly having two step assemblies mounted thereto;
Figure 8 illustrates the support assembly of Figure 6 without the step assemblies mounted thereto;
Figures 9A to 9D are magnified views of portions of the support assembly of Figure 7;
Figure 10A illustrates an exemplary step element with a bracket mounted in a first configuration;
Figure 10B illustrates the step element of Figure 9A with the bracket mounted in a second configuration;

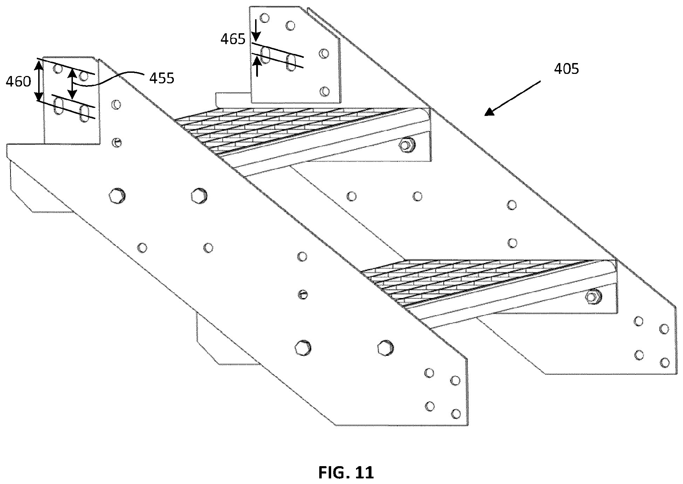

Figure 11 illustrates the step element of Figure 9A without a bracket mounted thereto.

### DETAILED DESCRIPTION

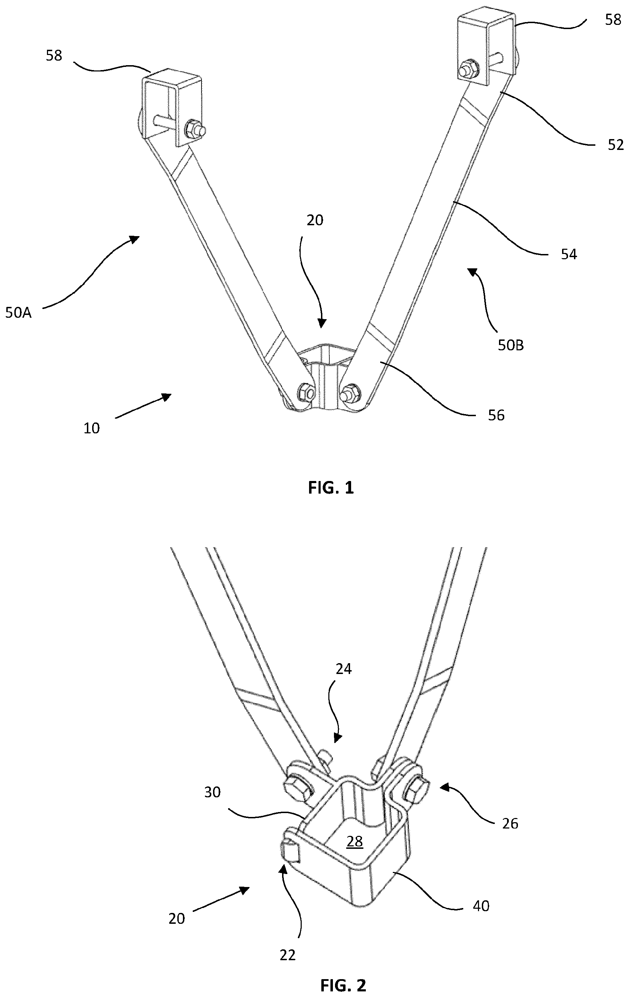

Figure 1 illustrates an exemplary bracing system 10 having a bracket for clamping to a frame element such as a box section element. The box section element may be a support leg or a part of a platform for supporting a person or plant as explained below. The bracing system also includes a first arm 50A connected to a first part 30 of the bracket 20 and a second arm 50A connected to a second part 40 of the bracket 20. C-shaped brackets 58 are also shown connected to the ends of the first and second arms 50A. The C-shaped brackets 58 allow each respective arm to be connected to a further frame element, for example further box section elements.

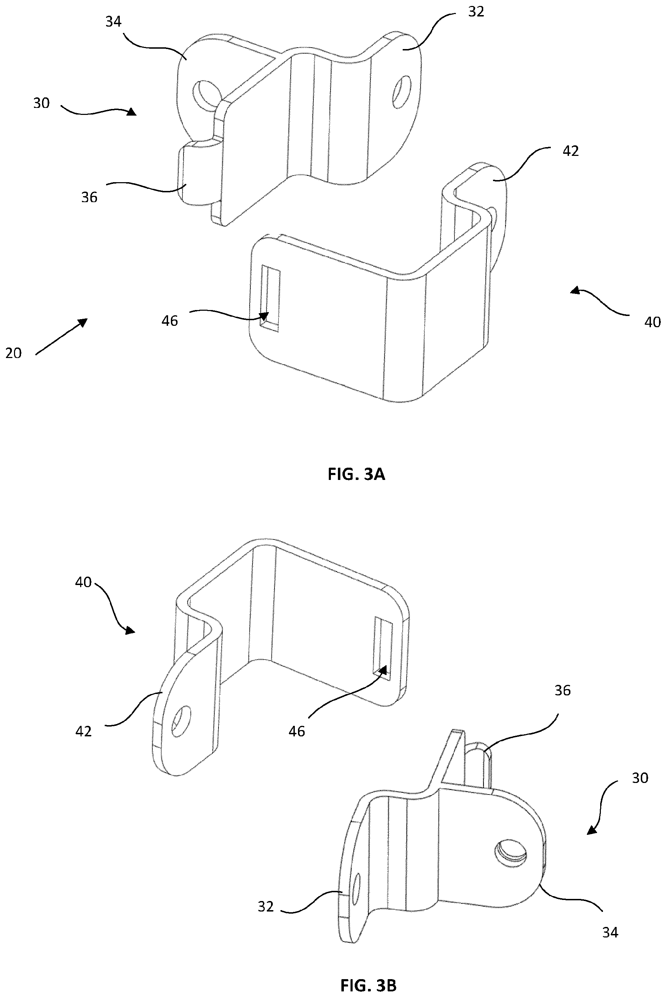

As shown in Figure 2, the first 30 and second parts 40 can be interlocked at a first end 22 and secured to one another at a second end 26. While the illustrated example uses a nut and bolt to secure the first 30 and second 40 parts together, it would be apparent this was merely one example of fastening means suitable for releasably securing the first 30 and second parts 40 together. When secured together, the first 30 and second 40 parts have respective inner surfaces which define an opening 28 for receiving the frame element. With reference to Figures 3A and 3B, the first part 30 has a substantially L-shaped body designed to abut two surfaces of the frame member when clamped. A first flange portion 32 extending from an end of the body provides a connection point to the first bar 50A and a second flange portion 34 extending on a different part of the body provides a connection point to the second bar 50B. The first 32 and second 34 flange portions each have a hole formed therein for receiving a fastener for securing the respective bar 50A, 50B thereto, but it would be apparent this was not essential. The first 32 and second 34 flange portions are also shown extending from adjacent portions of the body. The flange portions 32, 34, 42 can be considered to extend in an outward direction relative to the opening 28. The second part 40 has a substantially J-shaped body with a first flange portion 42 extending from an end of the body for connecting to the first bar 50A. The first 30 and second 40 parts are designed such that the first flange portion 32 of the first part 30 abuts the first flange portion 42 of the second part 40 when the bracket is clamped to the frame element. This allows the bar 50A to be connected to both flange portions 32, 42 using a single fixing point. When clamped, the first flange portions 32, 42 are arranged to abut one another approximately mid-way along one side of the bracket 20 as shown in Figure 2. This enables load from the first bar 50A to be transferred to the corresponding inner surface of the bracket and to apply a load to a designated side of the frame element. By having a single fixing point, it is also possible to easily release the second part 40 from the first part 30, as the first part 30 will still bear the load of the first bar 50A. This is allows the bracing system 10 to be easily mounted to a support assembly without having to first disassemble the entire support assembly. This is particularly useful in cases where a user has an existing support assembly installed and supporting plant and only subsequently realises there is undesirable movement in the support assembly. The present bracket 20 provides a convenient way to retrofit a bracing system to the support assembly to improve the stiffness of the support assembly.

While an L-shaped first part 30 and J-shaped second part 40 have been illustrated, it would be apparent these are merely exemplary shapes that allow the first 30 and second 40 parts to circumscribe a frame member having a particular cross-section, for example a square or rectangular cross-section. The first 30 and second 40 parts may be shaped differently while still retaining respective first 32, 42 and second 34 flange portions which function are described herein.

The first part 30 also has a tongue 36 extending from the body of the first part 30 which is arranged to pass through a slot 46 formed in the second part 40 to form the interlock. As the tongue 36 has a curved profile which extends away from the inner surface of the first part 30, this allows the second part 40 to be rotated relative to the first part 30 when engaging and disengaging the interlock between the parts 30, 40. While the tongue 36 is shown as part of the first part 30, and the slot 46 is formed in the second part 40, it would be apparent this was not essential and the first part may have a slot for receiving a tongue extending from the second part. Similarly, while a single tongue 36 and slot 46 are shown, this is merely an example of suitable inter-engaging elements for forming the interlock between the first 30 and second 40 parts.

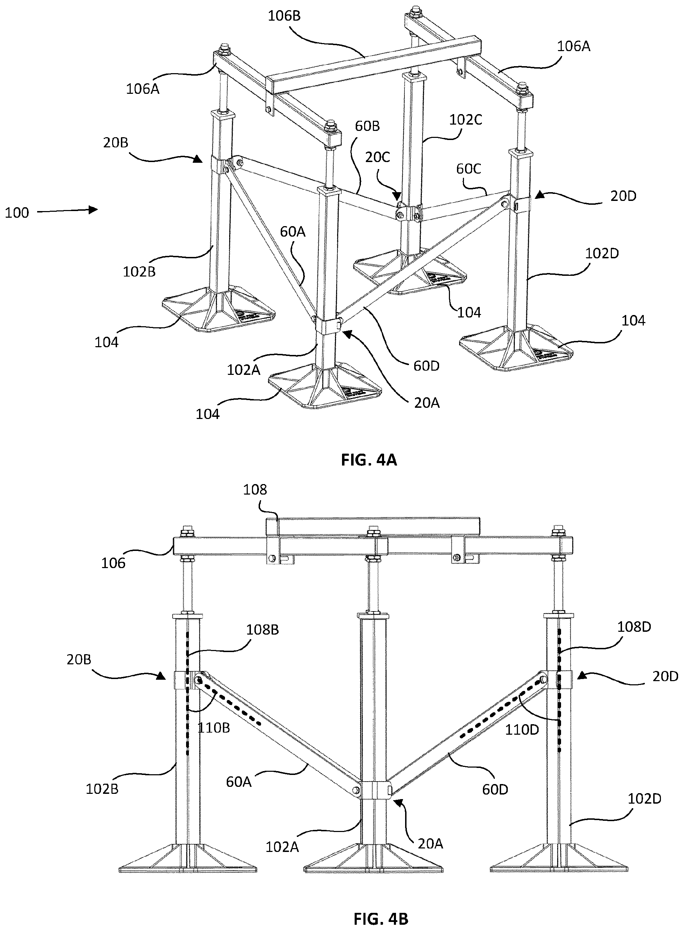

Figures 4A & 4B illustrate perspective and 3/4 side views of an exemplary support assembly 100. The support assembly 100 includes a platform and four support legs 102A-102D to support the platform above a surface. Each support leg also has a respective support foot 104 to provide a non-penetrative support assembly. This allows the support assembly to be free-standing on a surface, such a roof, where penetrating the roof is highly undesirable. The illustrated platform includes two frame elements 106A extending in a first direction and one frame element 106B extending in an orthogonal direction relative to frame elements 106A. As shown in Figures 4A and 4B, each support leg 102 has a bracket 20 secured thereto, and a bar 60 connects adjacent pairs of support legs 102. As shown in Figure 4B, the support legs 102 may be formed as frame elements, such as box section elements. The profile of the support leg may be the same as the frame elements which form the platform. The brackets 20 may be arranged at different heights on the support legs 102 to brace the support assembly 100. For example, a first bracket 20A may be secured below adjacent brackets 20B, 20D such that the bar 60A, 60D connecting the respective support legs 102B, 102D are at an angle 110B, 110D relative to a longitudinal axis 108B, 108D of the respective support leg 102B, 102D. While these angles 1110B, 110D the same, it would be apparent this was not essential. Where the support legs 102 are arranged in a square arrangement and all of the bars 60A-60D are the same length, the angles 110A-110D may be the same. However, different bars may be used which may provide different angles 110 between adjacent support legs 102. Similarly, where the platform being supported is not square, this may result in the bars 60 being at different angles 110 to one another. While a particular arrangement of frame elements are illustrated, it would be apparent the specific number and orientation were not essential, and the present bracing system is suitable for support assemblies having platforms formed of different arrangements of frame elements. The present bracing system 10 allows lateral forces, for example caused by wind exerting a force onto plant supported by the support assembly, to be transferred between adjacent pairs of support legs 102 to stiffen the overall support assembly 100. This is achieved by the brackets 20A-20D being shaped to transfer load from two adjacent support legs, for example 102B and 102D, onto adjacent sides of a respective support leg, for example 102A, clamped by a respective bracket 20A. This is particularly important with larger frame heights, under heavy plant and wind load.

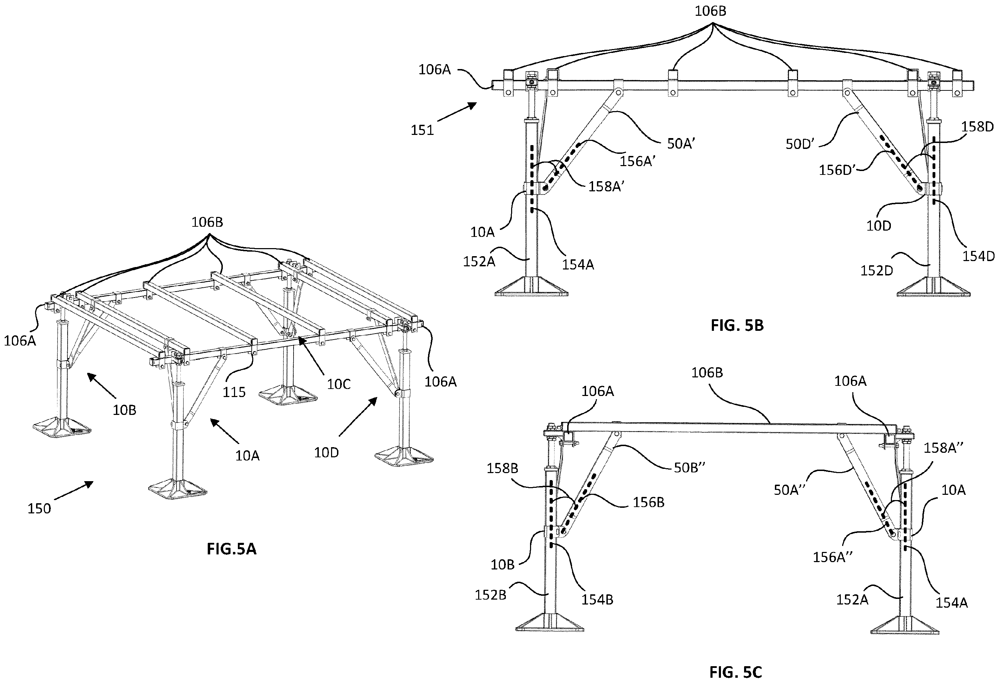

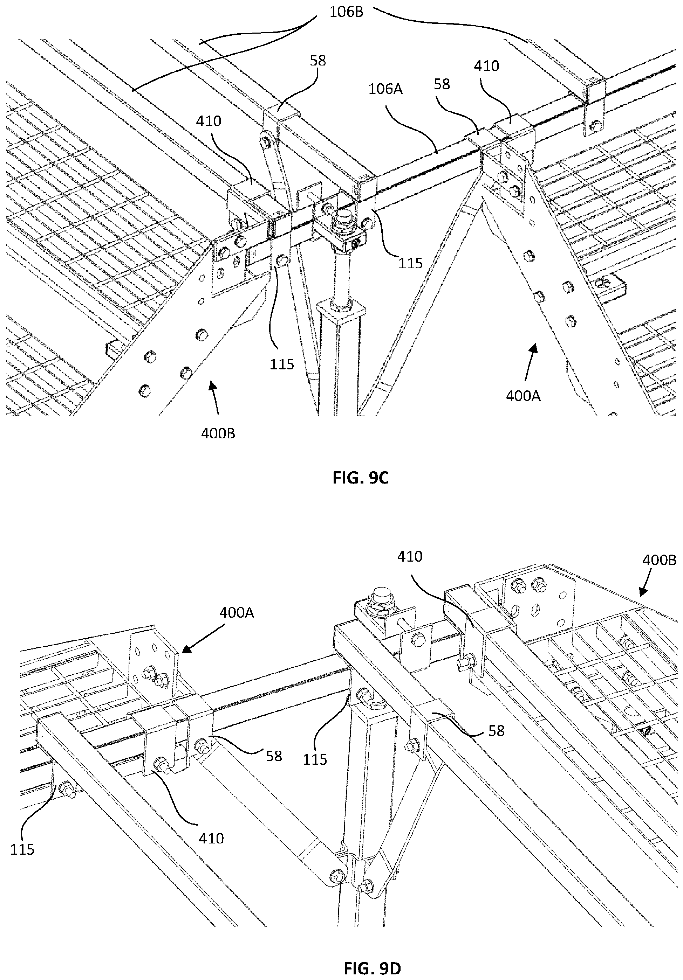

Figures 5A to 5C illustrate perspective and side views of an alternative exemplary support assembly 150. The support assembly 150 has a platform 151 including one layer of frame elements 106B arranged on top of a second layer of frame elements 106A. The frame elements 106A, 106B are shown as box section elements. The respective longitudinal axes of each of the box section elements 106A are arranged orthogonally relative to the respective longitudinal axis of each of the box section elements 106B. The platform is designed to provide an elevated platform for a person and/or plant. Each of the box section elements 106B has a C-shaped bracket 115 (see also Figures 9C and 9D) mounted thereto for securing a respective box section element 106B to a respective box section element 106A. While the C-shaped bracket 115 can be mounted or formed integrally with the box section element 106B, it would be apparent this was not essential and the C-shaped bracket 115 may be separable from the box section element 106B. The support assembly 150 includes four bracing systems 10A-10D, each of which are connected to a respective support leg 152, to one of the box section elements 106A and to one of the box section elements 106B. As the layer of box section elements 106B is mounted on top of box section elements 106A, the first bar 50A' of bracing system 10A may form a larger angle 158A' relative to the longitudinal axis 154A compared to the angle 156A" between the second bar 50A" of the bracing system 10A and the longitudinal axis 154A. Where the bars 50A' and 50A" are the same length, this is particularly the case. Furthermore, when the fixing point of a given bracket 10 is released, the bracket can be slid along the longitudinal axis 154 of a support leg 152 so that a user can set the arrangement of each bracing system 10 to a number of discrete positions. This variable height adjustment is achieved by the pivotal connections between the first 30 and second 40 parts of the brackets which allow the bars 50 connected thereto to pivot about their respective pivotal connection.

The present bracing system 10 can be used with various sizes of box section elements and in multiple orientations as shown by the alternative support assemblies shown herein. For example, the bracing system can be used with heavy duty box section, such as 50mm x 50mm profile or 50mm x 100mm profile, and light duty box section, for example 40mm x 40mm profile. The present bracing system 10 can also be used with support frames, access frames and louvre frames. Furthermore, the clamping design can be easily fitted after a support assembly has been installed, with either inboard or outboard frame orientations so an installer always has access to interlock or separate the parts 30, 40. As the bracing system 10 is formed of separable parts, the bracing system can be provided as a kit (not shown) for easier packaging and transportation.

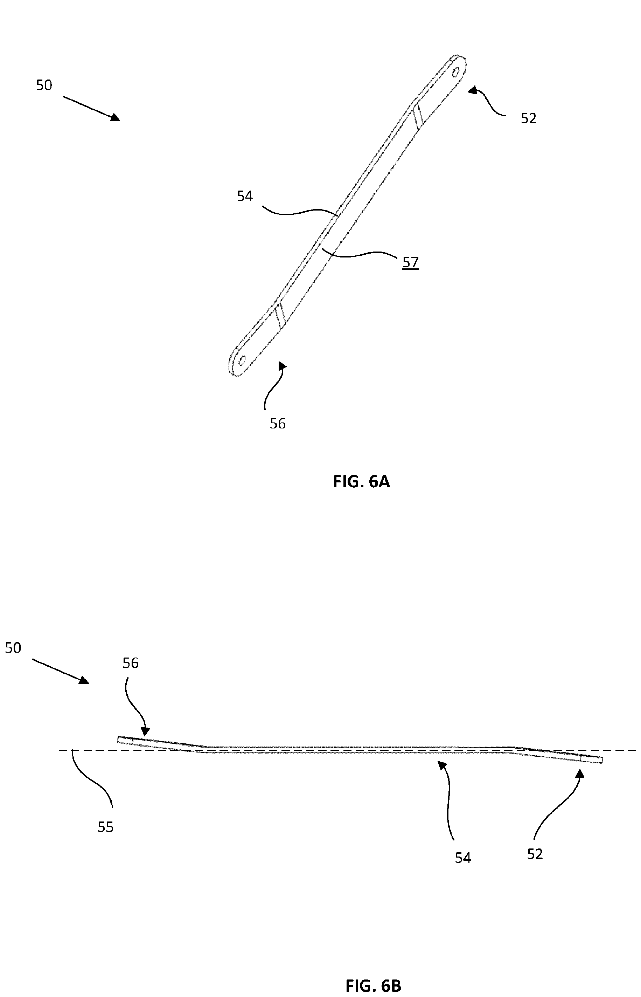

Figures 6A and 6B show an exemplary bar 50 that is used in the bracing system 10 of Figure 1A. As shown, the bar 50 has an elongate body, with a hole formed at each end of the body to provide a connection point to a respective bracket or fastener for mounting the bar 50 to a frame element. However, as shown in Figures 9C and 9D, there can be a large number of components located in close proximity to one another on the platform, and as such, it may not be possible to use straight bars 60, such as shown in Figure 4A and 4B, to brace a support assembly. The bar 50 illustrated in Figures 6A and 6B has first 52 and second 56 end portions which are linked by an interconnecting portion 54, with the end portions 52, 56 kinked relative to the interconnecting portion. That is to say, the end portions 52 and 56 extend at an angle relative to the longitudinal axis 55 of the bar 50. As shown, the end portions 52, 56 are disposed on either side of a plane defined by a major surface 57 the interconnecting portion 54. The angle between each of the end portions 52, 56 may be the same (i.e. the end portions 52, 56 may be parallel with one another). This allows for the end portions 52, 56 to abut with a corresponding surface of a frame element or bracket.

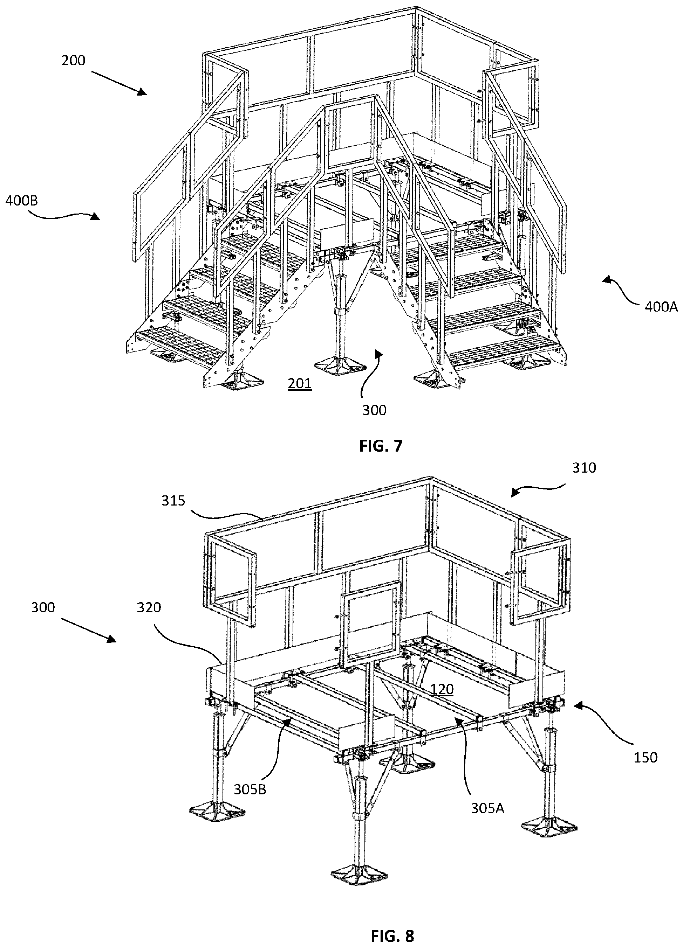

Figure 7 illustrates a support assembly 400 which is a combination of the support assembly 300 illustrated in Figure 8 and two step assemblies 400A, 400B mounted to different sides of the platform 151 of support assembly 300. The support assembly 300 is similar to the support assembly 150 described above and includes hand rail sections 310, 315 mounted to one or more box section elements 106A, 106B and skirt elements 320 mounted to the hand rail sections 310, 315. This provides a platform 151 with an upper surface 120 that is elevated above a surface 201, for example to provide safe access to plant, and/or to traverse other ancillary components that are present on a roof, such as ducting or pipes (not shown). The illustrated platform 151 is designed to be accessed from two sides 305A, 305B, for example adjacent sides of the platform 151. However, it would be apparent this was not essential and that access maybe from one side only, or from opposed sides of the platform 151.

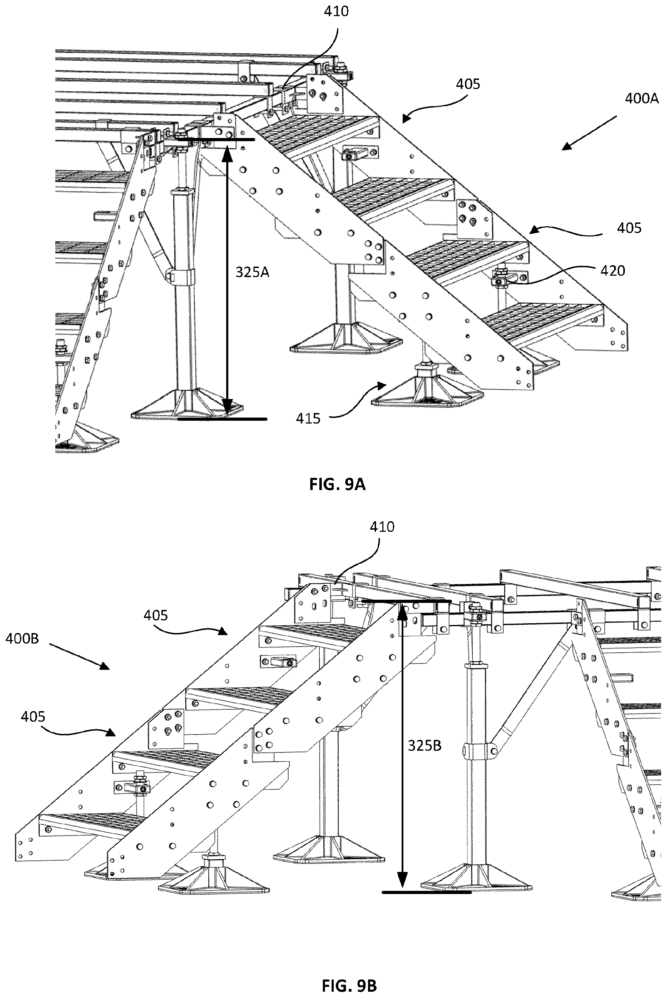

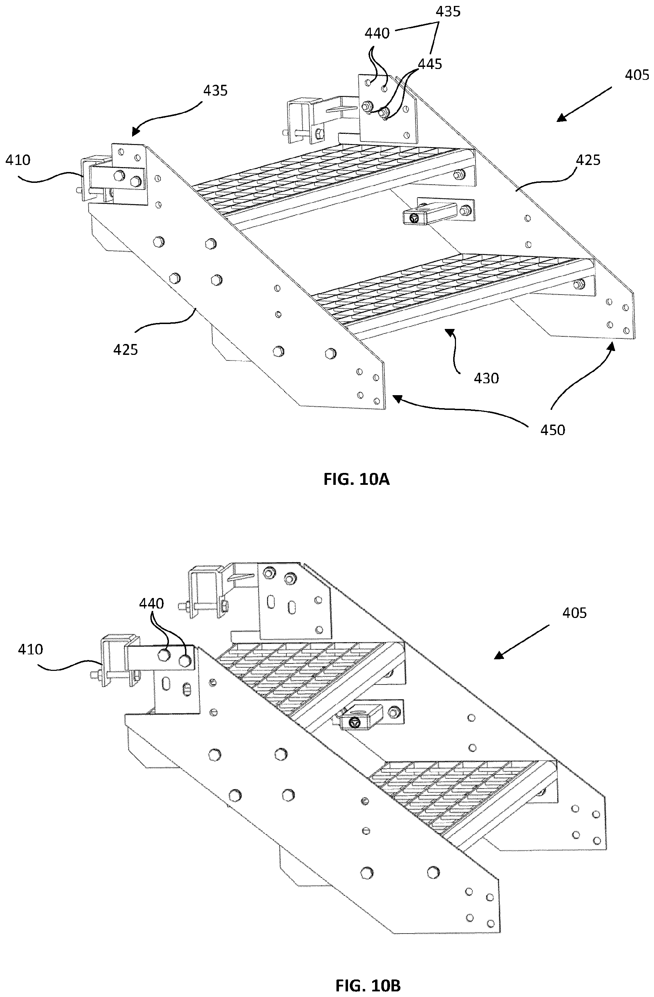

As shown in Figure 9A and 9B, and with reference to Figures 10A and 10B, each step assembly includes two substantially identical step elements 405. Each of the step elements is formed of opposed side plates 425 with two steps 430 formed between the side plates 425. While two steps 430 are shown, it would be apparent that this was not essential and one step may be used, or three or more steps may be used. The present step element 405 standardises one-step and two-step assemblies as each step element 405 can be used in different configurations to secure a given step element 405 to either side of the platform 151 and to another identical step element 405. Furthermore, the present step element 405 can be used with a variety of frame elements, for example box sections of different cross-section as exemplified above, by using a suitable bracket 410 adapted for use with a particular profile. For example, the present step element 405 can be connected to 40mm x 40mm profiles, 50mm x 50mm profiles and 100mm x 50mm profiles. This means there is no need to provide different configurations of step assemblies for different platform heights, as multiple step elements 405 can be connected to one another as required. Furthermore, as the same step element 405 can be used in different configurations, this reduces stocking levels and simplifies the assembly process and the lead times for a support assembly 200. Each side plate 425 also includes holes for mounting a bracket 420 for securing a support leg thereto.

As shown in Figure 9C, the first step assembly 400A is secured to one of the first layer of box section elements 106A at a first height 325A by a bracket 410 and the second step assembly 400B is secured to one of the second layer of box section elements 106B at a second height 325B by a similar bracket 410. This is achieved by having a first set of holes 435 at an upper end of each side plate 425 which includes a first pair of holes 440 arranged above a second pair of holes 445. The bracket 410 is secured to the step element 405 via one of the first 440 or second 445 pairs of holes using a bolt or similar fastener. The step element 405 shown in Figure 10A is configured to be mounted to the first (lower) layer of box section elements 106A. The step element 405 shown in Figure 10A is configured to be mounted to the second (upper) layer of box section elements 106B. Forming the second set of holes 445 as slots provides a variable spacing between the first 440 and second 445 pairs of holes which allows the same step element 405 to be secured to box section elements having different cross-sectional dimensions. For example, the slotted holes 445 may providing spacing 455 of at least 40mm to accommodate the height of a 40mm x 40mm profile, optionally including additional spacing for the thickness of a bracket 115 used to connect box section 106A to 106B. That is to say the spacing 455 between the first 440 and second 445 pairs of holes may be 40mm. Where a 50mm tall profile is used (i.e. a 50mm x 50mm profile or a 50mm x 100mm profile), a larger spacing 460 would be needed to accommodate the increased profile height. Thus, providing a slot length 465 that allows a fastener to travel by 10mm within the slot allows the same bracket 410 to be used to secure any profile height between 40mm and 50mm to the second pair of holes 445. Of course, it would be apparent that slotted holes 445 were not essential to the present invention, and the first set of holes 435 may be configured as circular holes. Similarly, while the specific hole dimensions and spacings 455, 460, 465 described herein are in relation to 40mm x 40mm profile, 50mm x 50mm and 50mm x 100mm profile, these are merely examples of light duty profile and heavy duty profiles. It would be apparent that different hole arrangements and dimensions could be used to a standardised support assembly which used different frame profiles as standard.

Each side plate 425 also includes a second set of holes 450 at a lower end to allow multiple step elements 405 to be connected together. By arranging the second set of holes 450 in the same manner as the first set of holes 435, a step element 405 is able to connect to either side of the platform 151 or an adjacent step element 405 using the first set of holes 435. Each side plate 425 also includes additional holes to secure hand rails thereto (see Figure 7). Thus, the present step element 405 can provide a standardized safe access solution to service plant at any roof height requirement.

The invention is not limited to the embodiments described herein but can be amended or modified without departing from the scope of the present invention as defined by the appended claims.

## Claims

1. A support assembly (300) comprising:
a platform (151) and one or more supports (102A-102D) configured to secure the platform above a surface (201) in a first direction,
wherein the platform (151) is formed of a plurality of frame elements (106A, 106B) and has an upper area (120) accessible from a first side (305A) of the platform and a second side (305B) of the platform adjacent the first side, wherein the first side is at a first height (325A) relative to the surface and the second side is at a second height (325B) relative to the surface (201), and wherein the first height is different to the second height, **characterised in that** the support assembly (300) further comprises:
a step element (405) comprising:
a pair of opposed side plates (425), and
at least one step (430) secured between the opposed side plates,
wherein each side plate (425) has a first set of holes (435) comprising a first pair of holes (445) and a second pair of holes (440), wherein the first pair of holes (445) are spaced below the second pair of holes (440) in the first direction,
wherein the step element (405) is mounted to: the first side (305A) of the platform via the first pair of holes (445) formed in the opposed side plates, or the second side (305B) of the platform via the second pair of holes (440) formed in the opposed side plates.

2. A support assembly according to claim 1, wherein the platform (151) comprises a first plurality of frame elements (106A) and a second plurality of frame elements (106B) mounted on top of the first plurality of frame elements, wherein a first of the first plurality of frame elements provides the first side (305A) of the platform and a first of the second plurality of frame elements provides the second side (305B) of the platform.

3. A support assembly according to claim 2, wherein the first of the second plurality of frame elements has a height in the first direction, and wherein the first pair of holes (445) are spaced from the second pair of holes (440) by at least the height (455; 460) of the first of the second plurality of frame elements.

4. A support assembly according to claim 1 or claim 2, wherein the first plurality of frame elements (106A) and the second plurality of frame elements (106B) are formed as box section elements, each box section element having a longitudinal axis, and wherein the longitudinal axes of the first plurality of box section elements (106A) extend in a first direction and the longitudinal axes of the second plurality of box section elements (106B) extend in a second direction different to the first direction.

5. A support assembly according to any of claims 1 to 4, further comprising one or more non-penetrative ground supports (415).

6. A support assembly according to any preceding claim, further comprising a handrail (310) securable to one of the side plates (425).

7. A support assembly according to any preceding claim, wherein the first pair of holes (445) are arranged as slots.

8. A support assembly according to claim 7, wherein the slots (445) extend in the first direction.

9. A support assembly according to claim 8, wherein the slots (445) extend by 10mm.

10. A support assembly according to any preceding claim, wherein the first set of holes (435) are arranged at an upper end of the opposed side plates (425), wherein each of the opposed side plates comprise a second set of holes (450) at a lower end of each side plate (425) for securing a second step element (405) thereto, wherein the second set of holes (450) are in substantially the same arrangement as the first set of holes (435).

11. A kit of parts for a support assembly (300), the kit of parts comprising:
a platform (151) and one or more supports (102A-102D) configured to secure the platform above a surface (201) in a first direction,
a plurality of frame elements (106A, 106B) for providing the platform, the platform having an upper area (120) accessible from a first side (305A) of the platform and a second side (305B) of the platform adjacent the first side, wherein the first side is at a first height relative to the surface (201) and the second side is at a second height relative to the surface, and wherein the first height is different to the second height, **characterised in that** the kit of parts further includes:
a step element (405) comprising:
a pair of side plates (425), each of the side plates having a first set of holes (435) comprising a first pair of holes (445) and a second pair of holes (440), wherein the first pair of holes (445) are spaced below the second pair of holes (440) in the first direction,
a step (430) mountable between the side plates (425),
wherein the first pair of holes (445) are configured to mount the step element (405) to the first side (305A) of the platform, and
wherein the second pair of holes (440) are configured to mount the step element (405) to the second side (305B) of the platform.

12. A method of assembling a support assembly (300) comprising the steps of:
securing a platform (151) above a surface (201) in a first direction using one or more supports (102A-102D), wherein the platform is formed of a plurality of frame elements (106A, 106B) and
has an upper area (120) accessible from a first side (305A) of the platform and a second side (305B) of the platform adjacent the first side, wherein the first side is at a first height relative to the surface and the second side is at a second height relative to the surface, and wherein the first height is different to the second height, **characterised in that** the method further comprises:
providing a step element (405) comprising:
a pair of opposed side plates (425), and
at least one step (430) secured between the opposed side plates,
wherein each side plate (425) has a first set of holes (435) comprising a first pair of holes (445) and a second pair of holes (440), wherein the first pair of holes (445) are spaced below the second pair of holes (440) in the first direction, and
securing the step element (405) to the first side (305A) of the platform via the first pair of holes (445) formed in the opposed side plates, or to the second side (305B) of the platform via the second pair of holes (440) formed in the opposed side plates.

## Patentansprüche

1. Stützanordnung (300), umfassend:
eine Plattform (151) und eine oder mehrere Stützen (102A-102D), die dazu konfiguriert sind, die Plattform oberhalb einer Oberfläche (201) in einer ersten Richtung zu sichern,
wobei die Plattform (151) aus einer Vielzahl von Rahmenelementen (106A, 106B) gebildet ist und einen oberen Bereich (120) aufweist, der von einer ersten Seite (305A) der Plattform und einer zweiten Seite (305B) der Plattform angrenzend an die erste Seite zugänglich ist, wobei die erste Seite auf einer ersten Höhe (325A) relativ zu der Oberfläche ist und die zweite Seite auf einer zweiten Höhe (325B) relativ zu der Oberfläche (201) ist und wobei sich die erste Höhe von der zweiten Höhe unterscheidet, **dadurch gekennzeichnet, dass** die Stützanordnung (300) ferner Folgendes umfasst:
ein Stufenelement (405), umfassend:
ein Paar gegenüberliegender Seitenplatten (425) und
mindestens eine Stufe (430), die zwischen den gegenüberliegenden Seitenplatten gesichert ist,
wobei jede Seitenplatte (425) einen ersten Satz von Löchern (435) aufweist, der ein erstes Paar von Löchern (445) und ein zweites Paar von Löchern (440) umfasst, wobei das erste Paar von Löchern (445) unterhalb des zweiten Paars von Löchern (440) in der ersten Richtung beabstandet ist,
wobei das Stufenelement (405) an Folgendem montiert ist: der ersten Seite (305A) der Plattform über das erste Paar von Löchern (445), das in den gegenüberliegenden Seitenplatten gebildet ist, oder der zweiten Seite (305B) der Plattform über das zweite Paar von Löchern (440), das in den gegenüberliegenden Seitenplatten gebildet ist.

2. Stützanordnung nach Anspruch 1, wobei die Plattform (151) eine erste Vielzahl von Rahmenelementen (106A) und eine zweite Vielzahl von Rahmenelementen (106B) umfasst, die oben auf der ersten Vielzahl von Rahmenelementen montiert sind, wobei ein erstes der ersten Vielzahl von Rahmenelementen die erste Seite (305A) der Plattform bereitstellt und ein erstes der zweiten Vielzahl von Rahmenelementen die zweite Seite (305B) der Plattform bereitstellt.

3. Stützanordnung nach Anspruch 2, wobei das erste der zweiten Vielzahl von Rahmenelementen eine Höhe in der ersten Richtung aufweist und wobei das erste Paar von Löchern (445) von dem zweiten Paar von Löchern (440) um mindestens die Höhe (455; 460) des ersten der zweiten Vielzahl von Rahmenelementen beabstandet ist.

4. Stützanordnung nach Anspruch 1 oder Anspruch 2, wobei die erste Vielzahl von Rahmenelementen (106A) und die zweite Vielzahl von Rahmenelementen (106B) als Kastenprofilelemente gebildet sind, wobei jedes Kastenprofilelement eine Längsachse aufweist, und wobei sich die Längsachsen der ersten Vielzahl von Kastenprofilelementen (106A) in einer ersten Richtung erstrecken und sich die Längsachsen der zweiten Vielzahl von Kastenprofilelementen (106B) in einer zweiten, sich von der ersten Richtung unterscheidenden Richtung erstrecken.

5. Stützanordnung nach einem der Ansprüche 1 bis 4, ferner umfassend eine oder mehrere nicht-penetrative Bodenstützen (415).

6. Stützanordnung nach einem vorhergehenden Anspruch, ferner umfassend einen Handlauf (310), der an einer der Seitenplatten (425) sicherbar ist.

7. Stützanordnung nach einem vorhergehenden Anspruch, wobei das erste Paar von Löchern (445) als Schlitze angeordnet ist.

8. Stützanordnung nach Anspruch 7, wobei sich die Schlitze (445) in der ersten Richtung erstrecken.

9. Stützanordnung nach Anspruch 8, wobei sich die Schlitze (445) um 10 mm erstrecken.

10. Stützanordnung nach einem vorhergehenden Anspruch, wobei der erste Satz von Löchern (435) an einem oberen Ende der gegenüberliegenden Seitenplatten (425) angeordnet ist, wobei jede der gegenüberliegenden Seitenplatten einen zweiten Satz von Löchern (450) an einem unteren Ende jeder Seitenplatte (425) zum Sichern eines zweiten Stufenelements (405) daran umfasst, wobei der zweite Satz von Löchern (450) im Wesentlichen in der gleichen Anordnung wie der erste Satz von Löchern (435) vorliegt.

11. Teilesatz für eine Stützanordnung (300), wobei der Teilesatz Folgendes umfasst:
eine Plattform (151) und eine oder mehrere Stützen (102A-102D), die dazu konfiguriert sind, die Plattform oberhalb einer Oberfläche (201) in einer ersten Richtung zu sichern,
eine Vielzahl von Rahmenelementen (106A, 106B) zum Bereitstellen der Plattform, wobei die Plattform einen oberen Bereich (120) aufweist, der von einer ersten Seite (305A) der Plattform und einer zweiten Seite (305B) der Plattform angrenzend an die erste Seite zugänglich ist, wobei die erste Seite auf einer ersten Höhe relativ zu der Oberfläche (201) ist und die zweite Seite auf einer zweiten Höhe relativ zu der Oberfläche ist und wobei sich die erste Höhe von der zweiten Höhe unterscheidet, **dadurch gekennzeichnet, dass** der Teilesatz ferner Folgendes beinhaltet:
ein Stufenelement (405), umfassend:
ein Paar von Seitenplatten (425), wobei jede der Seitenplatten einen ersten Satz von Löchern (435) aufweist, der ein erstes Paar von Löchern (445) und ein zweites Paar von Löchern (440) umfasst, wobei das erste Paar von Löchern (445) unterhalb des zweiten Paars von Löchern (440) in der ersten Richtung beabstandet ist,
eine Stufe (430), die zwischen den Seitenplatten (425) montierbar ist,
wobei das erste Paar von Löchern (445) dazu konfiguriert ist, das Stufenelement (405) an der ersten Seite (305A) der Plattform zu montieren, und
wobei das zweite Paar von Löchern (440) dazu konfiguriert ist, das Stufenelement (405) an der zweiten Seite (305B) der Plattform zu montieren.

12. Verfahren zum Zusammenbauen einer Stützanordnung (300), umfassend die folgenden Schritte:
Sichern einer Plattform (151) oberhalb einer Oberfläche (201) in einer ersten Richtung unter Verwendung einer oder mehrerer Stützen (102A-102D), wobei die Plattform aus einer Vielzahl von Rahmenelementen (106A, 106B) gebildet ist und einen oberen Bereich (120) aufweist, der von einer ersten Seite (305A) der Plattform und einer zweiten Seite (305B) der Plattform angrenzend an die erste Seite zugänglich ist, wobei die erste Seite auf einer ersten Höhe relativ zu der Oberfläche ist und die zweite Seite auf einer zweiten Höhe relativ zu der Oberfläche ist und wobei sich die erste Höhe von der zweiten Höhe unterscheidet, **dadurch gekennzeichnet, dass** das Verfahren ferner Folgendes umfasst:
Bereitstellen eines Stufenelements (405), umfassend:
ein Paar gegenüberliegender Seitenplatten (425) und
mindestens eine Stufe (430), die zwischen den gegenüberliegenden Seitenplatten gesichert ist,
wobei jede Seitenplatte (425) einen ersten Satz von Löchern (435) aufweist, der ein erstes Paar von Löchern (445) und ein zweites Paar von Löchern (440) umfasst, wobei das erste Paar von Löchern (445) unterhalb des zweiten Paars von Löchern (440) in der ersten Richtung beabstandet ist, und
Sichern des Stufenelements (405) an der ersten Seite (305A) der Plattform über das erste Paar von Löchern (445), das in den gegenüberliegenden Seitenplatten gebildet ist, oder an der zweiten Seite (305B) der Plattform über das zweite Paar von Löchern (440), das in den gegenüberliegenden Seitenplatten gebildet ist.

## Revendications

1. Ensemble support (300) comprenant :
une plate-forme (151) et un ou plusieurs supports (102A-102D) conçus pour fixer la plate-forme au-dessus d'une surface (201) dans une première direction,
ladite plate-forme (151) étant formée d'une pluralité d'éléments de cadre (106A, 106B) et comportant une zone supérieure (120) accessible à partir d'un premier côté (305A) de la plate-forme et un second côté (305B) de la plate-forme adjacent au premier côté, ledit premier côté étant à une première hauteur (325A) par rapport à la surface et ledit second côté étant à une seconde hauteur (325B) par rapport à la surface (201), et ladite première hauteur étant différente de la seconde hauteur, **caractérisé en ce que** l'ensemble support (300) comprend en outre :
un élément de marches (405) comprenant :
une paire de plaques latérales opposées (425), et
au moins une marche (430) fixée entre les plaques latérales opposées,
chaque plaque latérale (425) comportant un premier ensemble de trous (435) comprenant une première paire de trous (445) et une seconde paire de trous (440), ladite première paire de trous (445) étant espacés en dessous de la seconde paire de trous (440) dans la première direction,
ledit élément de marches (405) étant monté sur : le premier côté (305A) de la plate-forme par l'intermédiaire de la première paire de trous (445) formés dans les plaques latérales opposées, ou le second côté (305B) de la plate-forme par l'intermédiaire de la seconde paire de trous (440) formés dans les plaques latérales opposées.

2. Ensemble support selon la revendication 1, ladite plate-forme (151) comprenant une première pluralité d'éléments de cadre (106A) et une seconde pluralité d'éléments de cadre (106B) montés sur le dessus de la première pluralité d'éléments de cadre, un premier de la première pluralité d'éléments de cadre fournissant le premier côté (305A) de la plate-forme et un premier de la seconde pluralité d'éléments de cadre fournissant le second côté (305B) de la plate-forme.

3. Ensemble support selon la revendication 2, ledit premier de la seconde pluralité d'éléments de cadre possédant une hauteur dans la première direction, et ladite première paire de trous (445) étant espacés de la seconde paire de trous (440) d'au moins la hauteur (455 ; 460) du premier élément de la seconde pluralité d'éléments de cadre.

4. Ensemble support selon la revendication 1 ou la revendication 2, ladite première pluralité d'éléments de cadre (106A) et ladite seconde pluralité d'éléments de cadre (106B) étant formés en tant qu'éléments de section de boîte, chaque élément de section de boîte possédant un axe longitudinal, et
lesdits axes longitudinaux de la première pluralité d'éléments de section de boîte (106A) s'étendant dans une première direction et lesdits axes longitudinaux de la seconde pluralité d'éléments de section de boîte (106B) s'étendant dans une seconde direction différente de la première direction.

5. Ensemble support selon l'une quelconque des revendications 1 à 4, comprenant en outre un ou plusieurs supports de sol non pénétrants (415).

6. Ensemble support selon une quelconque revendication précédente, comprenant en outre une main courante (310) pouvant être fixée à l'une des plaques latérales (425).

7. Ensemble support selon une quelconque revendication précédente, ladite première paire de trous (445) étant agencée sous forme de fentes.

8. Ensemble support selon la revendication 7, lesdites fentes (445) s'étendant dans la première direction.

9. Ensemble support selon la revendication 8, lesdites fentes (445) s'étendant sur 10 mm.

10. Ensemble support selon une quelconque revendication précédente, ledit premier ensemble de trous (435) étant agencé au niveau d'une extrémité supérieure des plaques latérales opposées (425), chacune des plaques latérales opposées comprenant un second ensemble de trous (450) au niveau d'une extrémité inférieure de chaque plaque latérale (425) pour fixer un second élément de marches (405) à celles-ci, ledit second ensemble de trous (450) étant sensiblement dans le même agencement que le premier ensemble de trous (435).

11. Kit de pièces pour un ensemble support (300), le kit de pièces comprenant :
une plate-forme (151) et un ou plusieurs supports (102A-102D) conçus pour fixer la plate-forme au-dessus d'une surface (201) dans une première direction,
une pluralité d'éléments de cadre (106A, 106B) pour fournir la plate-forme, la plate-forme comportant une zone supérieure (120) accessible à partir d'un premier côté (305A) de la plate-forme et un second côté (305B) de la plate-forme adjacent au premier côté, ledit premier côté étant à une première hauteur par rapport à la surface (201) et ledit second côté étant à une seconde hauteur par rapport à la surface, et ladite première hauteur étant différente de la seconde hauteur, **caractérisé en ce que** le kit de pièces comprend en outre :
un élément de marches (405) comprenant :
une paire de plaques latérales (425), chacune des plaques latérales comportant un premier ensemble de trous (435) comprenant une première paire de trous (445) et une seconde paire de trous (440), ladite première paire de trous (445) étant espacés en dessous de la seconde paire de trous (440) dans la première direction,
une marche (430) pouvant être montée entre les plaques latérales (425),
ladite première paire de trous (445) étant conçus pour monter l'élément de marches (405) sur le premier côté (305A) de la plate-forme, et
ladite seconde paire de trous (440) étant conçus pour monter l'élément de marches (405) sur le second côté (305B) de la plate-forme.

12. Procédé d'assemblage d'un ensemble support (300) comprenant les étapes de :
fixation d'une plate-forme (151) au-dessus d'une surface (201) dans une première direction à l'aide d'un ou plusieurs supports (102A-102D), ladite plate-forme étant formée d'une pluralité d'éléments de cadre (106A, 106B) et comportant une zone supérieure (120) accessible à partir d'un premier côté (305A) de la plate-forme et un second côté (305B) de la plate-forme adjacent au premier côté, ledit premier côté étant à une première hauteur par rapport à la surface et ledit second côté étant à une seconde hauteur par rapport à la surface, et ladite première hauteur étant différente de la seconde hauteur, **caractérisé en ce que** le procédé comprend en outre : la fourniture d'un élément de marches (405) comprenant :
une paire de plaques latérales opposées (425), et
au moins une marche (430) fixée entre les plaques latérales opposées, chaque plaque latérale (425) comportant un premier ensemble de trous (435) comprenant une première paire de trous (445) et une seconde paire de trous (440), ladite première paire de trous (445) étant espacés en dessous de la seconde paire de trous (440) dans la première direction, et la fixation de l'élément de marches (405) au premier côté (305A) de la plate-forme par l'intermédiaire de la première paire de trous (445) formés dans les plaques latérales opposées, ou au second côté (305B) de la plate-forme par l'intermédiaire de la seconde paire de trous (440) formés dans les plaques latérales opposées.
